# EUROPÄISCHE PATENTSCHRIFT

(11) **EP 1 910 437 B1**
(45) Veröffentlichungstag und Bekanntmachung des Hinweises auf die Patenterteilung: **21.04.2010**
(21) Anmeldenummer: 06743175.9
(22) Anmeldetag: 20.06.2006
(51) Int. Cl.: C08G 18/10, C08G 18/80, C08G 18/08, C09D 175/04

(54) **SELBSTVERNETZENDE PUR-DISPERSIONEN**
SELF-CROSSLINKING POLYURETHANE (PUR) DISPERSIONS
DISPERSIONS DE POLYURETHANE (PUR) AUTORETICULANTES

(30) Priorität: 29.06.2005 DE 102005030225
(43) Veröffentlichungstag der Anmeldung: 16.04.2008
(73) Patentinhaber: Bayer MaterialScience AG, 51368 Leverkusen (DE)
(72) Erfinder: DÖRR, Sebastian, 40597 Düsseldorf (DE); GRESZTA-FRANZ, Dorota, 40699 Erkrath (DE); MAZANEK, Jan, 51061 Köln (DE); MÜLLER, Heino, 51375 Leverkusen (DE); FLECK, Olaf, 51467 Bergisch Gladbach (DE); MÜLLER, Helmut, 51373 Leverkusen (DE); HALPAAP, Reinhard, 51519 Odenthal (DE); MEIXNER, Jürgen, 47803 Krefeld (DE)
(86) Internationale Anmeldenummer: PCT/EP2006/005878
(87) Internationale Veröffentlichungsnummer: WO 2007/000262

(56) Entgegenhaltungen:
- EP-A- 0 790 263
- WO-A-02/14395
- DE-C1- 19 930 555

## Beschreibung

Die vorliegende Erfindung betrifft ein Verfahren zur Herstellung selbstvernetzender PUR-Dispersionen sowie deren Verwendung.

In den letzten Jahren stieg die Bedeutung wässriger Lacke und Beschichtungsmittel aufgrund immer strengerer Emissionsrichtlinien bezüglich der bei der Lackapplikation freiwerdenden Lösemittel stark an. Obwohl inzwischen bereits für viele Anwendungsbereiche wässrige Lacksysteme zur Verfügung stehen, können diese das hohe Qualitätsniveau konventioneller, lösemittelhaltiger Lacke hinsichtlich Lösemittel- und Chemikalienbeständigkeit oder auch Elastizität und mechanischer Belastung oftmals nicht erreichen. Insbesondere sind bislang noch keine aus wässriger Phase zu verarbeitende Beschichtungsmittel auf Polyurethanbasis bekannt geworden, die den hohen Forderungen der Praxis bei der Automobilerstlackierung in ausreichendem Maß genügen.

Diese Feststellung gilt sowohl für die DE-A 40 01 783, die sich mit speziellen anionisch modifizierten aliphatischen Polyisocyanaten befasst, als auch für die Systeme der DE-A 24 56 469, der DE-A 28 14 815, der EP-A 0 012 348 und der EP-A 0 424 697, die wässrige Einbrennlackbindemittel auf Basis von blockierten Polyisocyanaten und organischen Polyhydroxylverbindungen beschreiben. Auch die Systeme auf Basis von carboxylgruppenhaltigen Polyurethan-Prepolymeren mit verkappten Isocyanatgruppen gemäß DE-A 27 08 611 oder die hochfunktionellen und daher zur Herstellung von elastischen Überzügen weitgehend ungeeigneten, blockierten wasserlöslichen Urethanprepolymerisate gemäß DE-A 32 34 590 sind für den genannten Zweck weitgehend unbrauchbar.

In den letzten Jahren sind weitere Verbesserungen der eingesetzten Einkomponenten(1K)-Einbrennlacke erzielt worden, wie z.B. in der EP-A 0 576 952, in der Kombinationen aus wasserlöslichen oder in Wasser dispergierbaren Polyhydroxyverbindungen mit in Wasser löslichen oder dispergierbaren blockierten Polyisocyanaten beschrieben werden, in der DE-A 199 30 555, in der Kombinationen aus einer in Wasser dispergierbaren urethangruppenhaltigen hydroxyfunktionellen Bindemittelkomponente, einer in einem mehrstufigen Verfahren über zwei Prepolymerisierungsschritte hergestellten Bindemittelkomponente mit blockierten Isocyanatgruppen, einem Aminoplast und weiteren Komponenten offenbart werden. Die EP-A 0 427 028 beschreibt als Einbrennfüller dienende wasserdispergierbare Bindemittelkombinationen, bestehend aus einer Dispersion eines Carboxylatgruppen enthaltenden urethanmodifizierten Polyesterharzes und einem dieser Dispersion zugegebenen Aminoplastharz und/oder blockiertem Polyisocyanat sowie ggf. zusätzlich einem Emulgator. Als Blockierungsmittel für das Polyisocyanat sind Alkohole, Phenole, Lactame und Oxime genannt. Nachteilig an diesen Einkomponenten-Systemen ist, dass die vorher hergestellten Komponenten dann zu Lacken formuliert werden und somit einen zusätzlichen Mischungsschritt benötigen.

Die Anmeldung WO 02/14395 beschreibt selbstvernetzende Polyurethandispersionen aus Urethangruppen und Hydroxygruppen enthaltenden, durch einen statistischen Einbau von Hydrophilierungsmitteln entstandenen Polyole und nicht hydrophilierten, zu mindestens 50 Äquivalentprozent mit Dimethylpyrazolderivaten blockierten Polyisocyanaten bestehen.

Die im Stand der Technik beschriebenen Lacke erfüllen jedoch nicht alle Anforderungen aus der Praxis, insbesondere nicht bezüglich des Feststoffgehalts.

Aufgabe der vorliegenden Erfindung bestand in der Bereitstellung von verbesserten 1K-Einbrennsystemen, wobei die Lacke insbesondere einen hohen Festkörpergehalt und die Beschichtungen eine gute Lösemittelbeständigkeit aufweisen sollten.

Es wurde nun ein Verfahren gefunden, nach dem sich selbstvemetzende Polyurethandispersionen mit verbessertem Festkörpergehalt herstellen lassen, wobei die daraus hergestellten Beschichtungen sich durch eine gute Lösemittelbeständigkeit auszeichnen.

Gegenstand der Erfindung ist daher ein Verfahren zur Herstellung von selbstvernetzenden Polyurethandispersionen, bei dem
a1) Polyisocyanate mit
a2) wenigstens einer Polyolkomponente, die eine mittlere OH-Funktionalität von ≥ 2 und ein zahlenmittleres Molekulargewicht von 62 - 2500 g/mol hat sowie ferner wenigstens eine säurefunktionelle Verbindung enthält,
   zu einem NCO- oder gegebenenfalls OH-funktionellen Prepolymer umgesetzt wird, welches dann mit
a3) wenigstens einer weiteren Polyolkomponente mit einer mittleren OH-Funktionalität von >1 und
a4) gegebenenfalls einer weiteren Polyisocyanatkomponente, die gleich oder verschieden zu a1) sein kann
   zu einem OH-funktionellen und NCO-gruppenfreien Polyurethan umgesetzt wird, wobei entweder vor oder nach einem beliebigen Teilschritt oder im Anschluss an die vollständige Umsetzung der Komponenten a1) bis a4) ein blockiertes Polyisocyanat zugegeben oder dieses blockierte Polyisocyanat nach erfolgter Umsetzung der Komponenten a1) bis a4) in situ aus einem Polyisocyanat und einem Blockierungsmittel hergestellt wird und abschließend die Säuregruppen der so erhaltenen Zusammensetzung
a5) durch Zugabe eine Neutralisationsmittels ganz oder teilweise deprotoniert werden und das erhaltene Polyurethan in Wasser dispergiert wird.

Ferner sind die nach dem erfindungsgemäßen Verfahren hergestellten Dispersionen sowie die darin enthaltenen Polyurethanpolymere ein Gegenstand der Erfindung.

Im erfindungsgemäßen Verfahren als ganzes betrachtet wird das Verhältnis der Isocyanatgruppen, einschließlich der blockierten Gruppen, zu allen gegenüber Isocyanaten reaktionsfähigen Gruppen von 0,5 bis 5,0 zu 1, bevorzugt 0,6 bis 2,0 zu 1, besonders bevorzugt 0,8 bis 1,5 zu 1 gewählt.

In den Komponenten a1) und a4) können alle organischen isocyanatgruppenaufweisende Verbindungen, jedoch bevorzugt aliphatische, cycloaliphatische, aromatische oder heterocyclische Polyisocyanate einer NCO-Funktionalität ≥ 2, einzeln oder in beliebigen Mischungen untereinander verwendet werden, wobei es unerheblich ist, ob diese durch Phosgenierung oder nach phosgenfreien Verfahren hergestellt wurden.

Beispiele solcher Isocyanate sind Tetramethylendiisocyanat, Cyclohexen-1,3- und 1,4-diisocyanat, Hexamethylendiisocyanat (HDI), 1-Isocyanato-3,3,5-trimethyl-5-isocyanatomethylcyclohexan (Isophorondiisocyanat IPDI), Methylen-bis-(4-isocyanatocyclohexan), Tetramethylxylylendiisocyanat (TMXDI), Triisocyanatononan, Toluylendiisocyanat (TDI), Diphenylmethan-2,4'-und/oder 4,4'-diisocyanat (MDI), Triphenylmethan-4,4'-diisocyanat oder Naphthylen-1,5-diisocyanat sowie beliebige Gemische derartiger Isocyanate.

Ebenfalls gut geeignet sind die davon abgeleiteten Polyisocyanate mit Uretdion-, Carbodiimid-, Isocyanurat-, Iminooxadiazindion-, Biuret-, Urethan-, Allophanat-, Oxadiazintrion- oder Acylharnstoff-Strukur sowie Polyisocyanatprepolymere einer mittleren NCO-Funktionalität > 1, wie sie werden durch Vorreaktion eines molaren Überschusses eines der obengenannten Polyisocyanate, mit einem organischen Material erhalten werden, das mindestens zwei isocyanatreaktive Wasserstoffatome pro Molekül, z.B. in Form von OH-Gruppen, aufweist.

Bevorzugt werden in a1) Verbindungen der vorstehend genannten Art mit einem Molekulargewicht von 140 bis 1000 g/mol eingesetzt.

Besonders bevorzugt werden in Komponente a1) und/oder a4) Polyisocyanate oder Polyisocyanatgemische der genannten Art mit ausschließlich aliphatisch und/oder cycloaliphatisch gebundenen Isocyanatgruppen eingesetzt, insbesondere solche auf Basis von Hexamethylendiisocyanat (HDI), Isophorondiisocyanat (IPDI) und/oder 4,4'-Diisocyanatodicyclohexylmethan.

Die Polyolkomponente a2) hat bevorzugt eine mittlere OH-Funktionalität von 2 bis 6 und ein zahlenmittleres Molekulargewicht von 62 bis 2500 g/mol, bevorzugt 62 bis 1000 g/mol, besonders bevorzugt 62 bis 500 g/mol und enthält eine säurefunktionelle Verbindung, die neben der Säurefunktion noch mindestens eine isocyanatreaktive Gruppe wie OH, NH oder SH aufweist.

Bevorzugt entspricht Komponente a2) der vorstehenden Definition und enthält 1,4-Butandiol, 1,3-Butandiol, 1,6-Hexandiol, 2,2,4-Trimethyl-1,3-pentandiol, Trimethylolpropan und/oder Polyester- und/oder Polyetherpolyole mit einem zahlenmittleren Molekulargewicht von ≤ 2000 g/mol. Im Fall der Verwendung von Polyethern enthält die Komponente a2) bevorzugt mehr als 50 Mol-% bezogen auf die Gesamtmenge der Komponente a2) einer säurefunktionellen Verbindung, die neben der Säurefunktion noch mindestens eine isocyanatreaktive Gruppe wie OH, NH oder SH aufweist.

Beispiele solcher säurefunktionellen Verbindungen sind hydroxyfunktionelle Carbonsäuren und/oder Sulfonsäuren, bevorzugt Mono- und Dihydroxycarbonsäuren, wie 2-Hydroxyessigsäure, 3-Hydroxypropansäure, 12-Hydroxy-9-octadecansäure- (Rizinolsäure), Hydroxypivalinsäure, Milchsäure und/oder Dimethylolpropionsäure. Bevorzugt sind Hydroxypivalinsäure, Milchsäure und/oder Dimethylolpropionsäure, besonders bevorzugt ist Dimethylolpropionsäure.

Besonders bevorzugt enthält a2) ausschließlich solche vorstehend genannten säurefunktionelle Verbindungen, ganz besonders bevorzugt wird als a2) ausschließlich Dimethylolpropionsäure eingesetzt.

Die in a3) eingesetzte Polyolkomponente besteht aus
b1) 2- bis 6-wertigen Alkoholen mit zahlenmittleren Molekulargewichten von 62 bis 300 g/mol, bevorzugt 62 bis 182 g/mol, besonders bevorzugt 62 bis 118 g/mol,
b2) Polyolen mit einer OH-Funktionalität ≥ 2 und mit zahlenmittleren Molekulargewichten von 300 bis 5000 g/mol, bevorzugt 300 bis 3000 g/mol, besonders bevorzugt 300 bis 2000 g/mol und/oder
b3) monofunktionellen linearen Polyethern mit zahlenmittleren Molekulargewichten von 300 bis 3000 g/mol, bevorzugt 300 bis 2000 g/mol, besonders bevorzugt 300 bis 1000g/mol.

Als Polyole b1) kommen 2- bis 6-wertige Alkohole und/oder deren Gemische in Betracht, die keine Estergruppen aufweisen. Typische Beispiele sind Ethandiol-1,2, Propandiol-1,2 und -1,3, Butandiol-1,4, -1,2 oder Hexandiol-1,6, 1,4-Dihydroxycyclohexan, Glycerin, Trimethylolethan, Trimethylolpropan, Pentaerythrit und Sorbit. Selbstverständlich können als Komponente b1) auch Alkohole mit ionischen oder in ionische Gruppen überführbare Gruppen eingesetzt werden.

Bevorzugte Verbindungen für b1) sind 1,4- oder 1,3-Butandiol, 1,6-Hexandiol und/oder Trimethylolpropan.

Geeignete Polyole der Komponente b2) sind ausgewählt aus der Gruppe der Polyether, Polyester und/oder Polycarbonate. Bevorzugt enthält die b2) mindestens ein estergruppenenthaltendes Polyol mit einem zahlenmittleren Molekulargewicht von 350 bis 4000 g/mol, bevorzugt 350 bis 2000 g/mol, besonders bevorzugt 350 bis 1000 g/mol. Die bevorzugte mittlere OH-Funktionalität beträgt 2 bis 4 OH-Gruppen pro Molekül.

Solche estergruppenenthaltenden Polyole sind die an sich bekannten Polyesterpolyole, die aus niedermolekularen Polyolen und Dicarbonsäuren aufgebaut sind. Geeignete niedermolekularen Polyolen für diesen Zweck sind beispielsweise 1,4-Butandiol, 1,3-Butandiol, 1,6-Hexandiol, 2,2,4-Trimethyl-1,3-pentandiol, Trimethylolpropan, Pentaerythrit oder Sorbit. Geeignete Dicarbonsäuren sind beispielsweise aromatische Dicarbonsäuren wie Phthalsäure, Isophthalsäure und Terephthalsäure; cycloaliphatische Dicarbonsäuren wie Hexahydrophthalsäure, Tetrahydrophthalsäure, Endomethylentetrahydrophthalsäure und/oder deren Anhydride; und aliphatische Dicarbonsäuren, wie Bernsteinsäure, Glutarsäure, Adipinsäure, Korksäure, Azelainsäure, Sebacinsäure und/oder deren Anhydride. Bevorzugt werden aliphatische Dicarbonsäuren zum Aufbau der Esterdiole verwendet.

Bevorzugt werden in Komponente b2) als Polyesterpolyole Polycaprolactondiole mit einem zahlenmittleren Molekulargewicht von 350 bis 4000 g/mol, bevorzugt 350 bis 2000 g/mol, besonders bevorzugt 350 bis 1000 g/mol eingesetzt. Diese sind in an sich bekannter Weise aus einem Diol, Triol oder Diol/Triolgemisch der oben beispielhaft genannten Art als Starter und ε-Caprolacton erhältlich.

Bevorzugte Polycaprolactondiole werden durch Polymerisation von ε-Caprolacton unter Verwendung von 1,6-Hexandiol als Starter hergestellt.

Besonders bevorzugte Polyesterpolyole sind solche auf Basis von Adipinsäure, Phthalsäure, Isophthalsäure und Tetrahydrophthalsäure.

In Komponente b2) können auch (Co)polyether aus Ethylenoxid, Propylenoxid und/oder Tetrahydrofuran eingesetzt werden. Bevorzugt sind Polyether mit einem zahlenmittleren Molekulargewicht von 500 bis 2000 g/mol, wie Polyethylenoxide oder Polytetrahydrofurandiole. Ferner können in b2) auch hydroxylgruppenhaltige Polycarbonate wie Hexandiolpolycarbonat oder Polyestercarbonate enthalten sein mit einem bevorzugten zahlenmittleren Molekulargewicht von 400 bis 4000 g/mol, besonders bevorzugt 400 bis 2000 g/mol.

Geeignete monofunktionelle lineare Polyether der Komponente b3) sind z.B. (Co)polyether aus Ethylenoxid und/oder Propylenoxid. Bevorzugt sind monoalkoholgestartete Polyalkylenoxidpolyether mit einem zahlenmittleren Molekulargewicht von 350 bis 2500 g/mol mit mindestens 70 % Ethylenoxid-Einheiten. Besonders bevorzugt sind solche (Co)polymere mit mehr als 75 % Ethylenoxideinheiten und einem zahlenmittleren Molekulargewicht von 300 bis 2500 g/mol, bevorzugt 500 bis 1000 g/mol. Als Startermoleküle bei der Herstellung dieser Polyether werden bevorzugt monofunktionelle Alkohole mit 1 bis 6 Kohlenstoffatomen eingesetzt.

Die zusätzlich zu den Komponenten a1) bis a4) eingesetzten Polyisocyanate, unabhängig davon, ob sie in blockierter oder nicht blockierter Form eingesetzt werden, entsprechen denen bzw. basieren auf den bereits unter a1) bzw. a4) definierten Verbindungen.

Die hier eingesetzten Polyisocyanate können zusätzlich auch noch hydrophile Gruppen enthalten. Als Hydrophilierungsmittel können dabei alle für diese Zwecke geeigneten, kationischen, anionischen und/oder nichtionischen Verbindungen in eingebauter Form vorliegen. Beispielsweise sind dies Mono- und/oder Dihydroxycarbonsäuren oder monofunktionelle Alkylethoxylate. Selbstverständlich können auch Gemische verschiedener Hydrophilierungsmittel eingesetzt werden. Bevorzugt sind Dimethylolpropionsäure und/oder monofunktionelle Alkylethoxylate.

Es können auch Gemische aus hydrophilierten und nicht hydrophilierten Polyisocyanaten eingesetzt werden. Die Hydrophilierungsmittel werden bevorzugt in solcher Menge eingesetzt, die nicht für die Herstellung stabiler Dispersionen der blockierten Polyisocyanate ausreicht. Diese Mengen sind für den Fachmann leicht durch Routineversuche ermittelbar.

Für den Fall, dass die hier eingesetzten Polyisocyanate in blockierter Form entweder vor Umsetzung der Komponenten a1) bis a4) oder erst im Anschluss daran zugesetzt werden, weisen diese blockierten Polyisocyanate NCO-Gruppen auf, die mit dem Fachmann an sich bekannten Blockierungsmitteln blockiert sind.

Beispielsweise geeignete Blockierungsmittel sind ε-Caprolactam, Malonsäurediethylester, Acetessigsäureethylester, Oxime wie Butanonoxim, Diisopropylamin, Esteramine wie Alkylalaninester, tert.-Butylbenzylamin, Dimethylpyrazol, Triazol bzw. deren Gemische. Bevorzugt sind ε-Caprolactam, Butanonoxim, Diisopropylamin, 3,5-Dimethylpyrazol, Triazol und/oder deren Gemische.

Der Gehalt an freien NCO-Gruppen dieser blockierten Polyisocyanate beträgt typischerweise weniger als 1 Gew.-%, bevorzugt weniger als 0,1 Gew.%.

Anstelle der Verwendung von bereits blockierten Polyisocyanaten der vorstehend genannten Art, können im Anschluss an die Umsetzung von a1) bis a4)-miteinander auch Polyisocyanate mit freien NCO-Gruppen eingesetzt werden, die dann anschließend in situ blockiert werden. Als Blockierungsmittel sind ebenfalls die vorstehend genannten Verbindungen geeignet. Sie werden dabei in solchen Mengen eingesetzt, dass nach beendeter Blockierungsreaktion typischerweise mehr als 90% bevorzugt mehr als 99% der vormals freien NCO-Gruppen in blockierter Form vorliegen.

Zur Beschleunigung der Blockierungsreaktion können Katalysatoren wie beispielsweise tertiäre Amine, Zinn-, Zink- oder Wismuthverbindungen, insbesondere. Triethyl-amin, 1,4-Diazabicyclo-[2,2,2]-octan, Zinndioktoat oder Dibutylzinndilaurat mit verwendet werden.

Die bevorzugten Bedingungen einer solchen in situ-Blockierung sind dem Fachmann bekannt. Nachdem Blockierungsmittel und die zu blockierende Isocyanat-Komponente zusammen vorgelegt wurden wird typischerweise so lange gerührt, bis keine freien Isocyanatgruppen mehr nachweisbar sind. Neben der Verwendung eines einzelnen Blockierungsmittels können auch Gemische von zwei oder mehr Blockierungsmitteln mit den zu blockierenden Polyisocyanaten, die ggf. auch als Gemisch vorliegen können, blockiert werden.

Es ist weiterhin möglich, freie NCO-Gruppen von Diisocyanaten nur teilweise mit den Blockierungsmitteln umzusetzen und anschließend die nicht blockierten NCO-Gruppen unter Bildung von Uretdion-, Allophanat- und/oder Biuretmodifizierten Polyisocyanaten abzureagieren.

Selbstverständlich können zu jedem Zeitpunkt des erfindungsgemäßen Verfahrens, falls gewünscht, Lösungsmittel mit verwendet werden, die gegebenenfalls nach der Herstellung wieder entfernt werden. Daneben können auch Katalysatoren, Colöser und andere Hilfsmittel und Additive eingesetzt werden.

Während des erfindungsgemäßen Verfahrens ist es auch möglich, eine größere Menge eines wasser(teil)mischbaren Lösemittels wie Aceton oder Methylethylketon dem Reaktionsgemisch zuzugeben. Nach Abschluss der Reaktion wird Wasser dem Reaktionsgemisch zugefügt und das Lösungsmittel abdestilliert. Dies wird auch als Aceton- bzw. Slurry-Verfahren bezeichnet. Der Vorteil dieser Verfahrensweise liegt im geringen Anteil des Lösemittels in der fertigen Dispersion.

Beispiele für in a5) eingesetzte Neutralisationsmittel sind Triethylamin, Dimethylaminoethanol, Dimethylcyclohexylamin, Triethanolamin, Methyldiethanolamin, Diisopropanolamin, Ethyldiisopropylamin, Diisopropylcyclohexylamin, N-Methylmorpholin, 2-Amino-2- methyl-1-propanol, Ammoniak oder deren beliebige Gemische. Bevorzugte Neutralisationsmittel sind tert. Amine wie Triethylamin, Diisopropylhexylamin und Dimethylethanolamin, besonders bevorzugt ist Dimethylethanolamin.

Die Menge des eingesetzten Neutralisationsmittels wird im Allgemeinen so bemessen, dass der Neutralisationsgrad der in den erfindungsgemäßen Polyurethanen vorhandenen Carbonsäure- und/oder Sulfonsäuregruppen (molares Verhältnis von eingesetztem Amin zu vorhandenen Säuregruppen) mindestens 50 %, bevorzugt 80 % bis 120 %, besonders bevorzugt 95 bis 105 % beträgt. Die Neutralisation kann dabei vor, während oder nach dem Dispergier- bzw. Löseschritt erfolgen. Bevorzugt ist jedoch die Neutralisation vor der Wasserzugabe.

Die einzelnen Verfahrensschritte können alle in einem einzigen Reaktionsgefäß durchgeführt werden oder es können auch Schritte in verschiedenen Reaktionsgefäßen durchgeführt und die resultierenden Zwischenprodukte zur weiteren Reaktion vereint werden.

In einer bevorzugten Ausführungsform werden 5 bis 50, bevorzugt 8 bis 40 Gew.-%, besonders bevorzugt 10 bis 30 Gew.-% des NCO- bzw. OH-funktionellen Prepolymeren, 0,1 bis 20, bevorzugt 1 bis 10, besonders bevorzugt 1 bis 5 Gew.-% der Komponente a4), 20 bis 90, bevorzugt 40 bis 80, besonders bevorzugt 50 bis 70 Gew.-% der Komponente a3), 2 bis 50, bevorzugt 5 bis 30, besonders bevorzugt 10 bis 25% eines bereits blockierten Polyisocyanats sowie 0,01 bis 10, bevorzugt 0,5 bis 5, besonders bevorzugt 1 bis 3 Gew.-% der Komponente a5) eingesetzt, bevor in Wasser dispergiert wird. Die angegebenen %-Angaben beziehen sich auf die angegebenen Komponenten, ohne den Wasseranteil und ihre Summe beträgt 100 %.

In einer weiteren bevorzugten Ausführungsform werden in 2 bis 40, bevorzugt 5 bis 30, besonders bevorzugt 10 bis 25% eines bereits blockierten Polyisocyanats 5 bis 50, bevorzugt 10 bis 40 Gew.-%, besonders bevorzugt 10 bis 30 Gew.-% des NCO- bzw. OH-fiuiktionellen Prepolymeren hergestellt und mit 0,1 bis 20, bevorzugt 1 bis 10, besonders bevorzugt 1 bis 5 Gew.-% der Komponente a4), 30 bis 90, bevorzugt 40 bis 80, besonders bevorzugt 50 bis 70 Gew.-% der Komponente a3), sowie 0,01 bis 10, bevorzugt 0,5 bis 5, besonders bevorzugt 1 bis 3 Gew.-% der Komponente a5) versetzt, bevor in Wasser dispergiert wird. Die angegebenen %-Angaben beziehen sich auf die angegebenen Komponenten, ohne den Wasseranteil und ihre Summe beträgt 100%.

In einer ebenfalls bevorzugten Ausführungsform werden 5 bis 50, bevorzugt 10 bis 40 Gew.%, besonders bevorzugt 10 bis 30 Gew.-% des NCO- bzw. OH-funktionellen Prepolymeren mit 0,1 bis 20, bevorzugt 1 bis 10, besonders bevorzugt 1 bis 5 Gew.-% der Komponente a4), 30 bis 90, bevorzugt 40 bis 80, besonders bevorzugt 50 bis 70 Gew.-% der Komponente a3) zusammen umgesetzt und dann mit solchen Mengen eines Blockierungsmittels und weiterem Isocyanat versetzt, dass aus letzteren beiden Komponenten 2 bis 40, bevorzugt 5 bis 30, besonders bevorzugt 10 bis 25% eines blockierten Polyisocyanats resultieren. Diese Mischung wird dann abschließend mit 0,01 bis 10, bevorzugt 0,5 bis 5, besonders bevorzugt 1 bis 3 Gew.-% der Komponente a5) versetzt, bevor in Wasser dispergiert wird. Die angegebenen %-Angaben beziehen sich auf die angegebenen Komponenten, ohne den Wasseranteil und ihre Summe beträgt 100 %.

Die so erfindungsgemäß erhältlichen Dispersionen haben typischerweise Feststoffgehalte von 30 Gew.-% bis 60 Gew.-%, bevorzugt 40 Gew.-% bis 50 Gew.-%.

Die nach dem erfindungsgemäßen Verfahren erhältlichen Dispersionen können als freie Hydroxylgruppen enthaltende Einkomponenten-Einbrennsysteme zur Herstellung von Lacken, Farben und anderen Formulierungen verwendet. Dabei können die in der Beschichtungstechnologie üblichen Hilfs- und Zusatzmittel wie Pigmente, Verlaufsmittel, blasenverhindernde Zusatzmittel oder Katalysatoren mit verwendet werden.

Gegenstand der Erfmdung ist auch die Verwendung der Dispersionen zur Herstellung von Farben, Lacken oder Klebstoffen, insbesondere für die Automobilerstlackierung sowie Can und Coil Coating.

Diese wässrigen Einkomponenten-Beschichtungsmittel können nach allen beliebigen Methoden der Beschichtungstechnologie wie Spritzen, Streichen, Tauchen, Fluten oder mit Hilfe von Walzen und Rakeln auf beliebige hitzeresistente Substrate ein- oder mehrschichtig aufgetragen werden. Die Lackfilme haben im Allgemeinen eine Trockenschichtdicke von 0,001 bis 0,3 mm.

Geeignete Substrate sind beispielsweise Metall, Kunststoff, Holz oder Glas. Die Aushärtung des Lackfilmes findet bei 80 bis 260°C, bevorzugt bei 130 bis 260°C statt.

Die wässrigen Einkomponenten-Beschichtungsmittel eignen sich bevorzugt zur Herstellung von Überzügen und Lackierungen auf Stahlblechen, wie sie beispielsweise zur Herstellung von Fahrzeugkarosserien, Maschinen, Verkleidungen, Fässern oder Containern Verwendung finden. Besonders bevorzugt ist die Verwendung für die Herstellung von Automobilfüller und/oder Decklacken.

### Beispiele:

**Desmodur 44M:** monomeres Diphenylmethan-4,4'-diisocyanat, Isocyanatgehalt 34 Gew.-%, Bayer MaterialScience AG, Leverkusen, DE
**Desmodur VL R 20:** aromatisches Polyisocyanat auf Basis von Diphenylmethandiisocyanat, Isocyanatgehalt 31,5 Gew.-%, Bayer MaterialScience AG, Leverkusen, DE
**Pluriol A 500E:** Polyethylenglykolmonomethylether, Molekulargewicht 500 g/mol, BASF, Ludwigshafen, DE
**Desmodur Z 4470 M/X:** aliphatisches Polyisocyanat auf Basis von Isophorondiisocyanat 70 Gew.-%ig gelöst in einer Mischung aus Methoxypropylacetat und Xylol (1/1), Isocyanatgehalt 12 Gew.-%,Bayer MaterialScience AG, Leverkusen, DE
**Desmodur Z 4470:** aliphatisches Polyisocyanat auf Basis von Isophorondiisocyanat, Isocyanatgehalt 17 Gew.%, Bayer MaterialScience AG, Leverkusen, DE
**Desmodur VP LS 2253:** Blockiertes aliphatisches Polyisocyanat auf der Basis von Hexamethyldiisocyanat, Isocyanatgehalt 11 Gew.-% (blockiert), Bayer MaterialScience AG, Leverkusen, DE
**Shellsol SN 100:** Aromatisches Kohlenwasserstoffgemisch, Siedebereich 160 -180°C, Shell AG

Sofern nicht abweichen vermerkt beziehen sich alle Prozentangaben auf Gewichtsprozent.

Die angegebenen Viskositäten wurden mittels Rotationsviskosimetrie nach DIN 53019 bei 23°C mit einem Rotationsviskosimeter der Firma Anton Paar Germany GmbH, Ostfildern, DE bestimmt.

NCO-Gehalte wurden, wenn nicht ausdrücklich anders erwähnt, volumetrisch gemäß DIN-EN ISO 11909 bestimmt.

Die angegebenen Partikelgrößen wurden mittels Laserkorrelationsspektroskopie (Gerät: Malvern Zetasizer 1000, Malver Inst. Limited) bestimmt.

Die Kontrolle auf freie NCO-Gruppen wurde mittels IR-Spektroskopie (Bande bei 2260 cm⁻¹) durchgeführt.

### Beispiel 1

Zu 468,8g Desmodur 44M wurden unter Rühren bei 80°C 37,1g 1-Butanol zugetropft. Nach 1 Stunde wurde der Katalysator (0,05g Zink(2-Ethylhexanoat)₂, 50% in MPA) zugegeben und der Ansatz wurde weitere 12 Stunden bei 80°C gerührt, währenddessen sank der NCO-Gehalt auf ca. 21,8% (theor. 22,8%). Danach wurden 497g N-Methylpyrrolidon zugeführt und der Ansatz wurde auf Raumtemperatur abgekühlt. Anschließend wurden 239,3g Butanonoxim so zugetropft, dass der Ansatz sich durch eine exotherme Reaktion bis auf ca. 70°C erwärmt. Er wurde dann bei 70°C gerührt, bis keine freien NCO-Gruppen IR-spektroskopisch nachweisbar waren (ca. 1 Stunde). Man erhielt eine hell-gelbe Flüssigkeit mit einem Festkörpergehalt von 60% und eine Viskosität von 7000 mPas, die auch nach mehreren Monaten nicht kristallisierte.

### Beispiel 2

132g Desmodur VL R 20 wurden unter Rühren in 146g N-Methylpyrrolidon bei Raumtemperatur gelöst. Zur homogenen Mischung wurden bei 50°C 87g Butanonoxim so zugetropft, dass der Ansatz sich durch eine exotherme Reaktion bis auf ca. 80°C erwärmt. Er wurde dann bei 80°C gerührt, bis keine freien NCO-Gruppen IR-spektroskopisch nachweisbar waren (ca. 1 Stunde). Man erhielt eine braune Flüssigkeit mit einem Festkörpergehalt von 60% und eine Viskosität von 1320 mPas, die für über 1 Jahr kristallisationsstabil blieb.

### Beispiel 3

132g Desmodur VL R 20 wurden unter Rühren in 150g N-Methylpyrrolidon bei 80°C gelöst. Zur homogenen Mischung wurden bei 80°C 9,9g 1-Butanol zugetropft. Nach 1 Stunde wurde der Katalysator (0,01g Zink(2-Ethylhexanoat)₂, 50% in MPA) zugegeben und der Ansatz wurde noch eine Stunde bei 80°C gerührt, währenddessen sank der NCO-Gehalt auf ca. 10,4% (theor. 10,5%). Danach wurde der Ansatz auf 50°C abgekühlt und 83,5g 3,5-Dimethylpyrazol wurden dazu so zugegeben, dass der Ansatz sich durch eine exotherme Reaktion bis auf ca. 70°C erwärmt. Er wurde dann bei 70°C gerührt, bis keine freien NCO-Gruppen IR-spektroskopisch nachweisbar waren (ca. 2 Stunden). Man erhielt eine braune Flüssigkeit mit einem Festkörpergehalt von 60% und eine Viskosität von 700 mPas, die bis zu ca. 8 Monaten lagerstabil bleibt.

### Beispiel 4

132g Desmodur VL R 20 wurden mit 13,2g Pluriol A 500E unter Rühren vorgelegt und auf 80°C aufgeheizt. Zur homogenen Mischung wurde bei 80°C der Katalysator (0,015g Dibutylzinndilaurat) zugegeben und der Ansatz wurde eine Stunde bei 80°C gerührt, währenddessen sank der NCO-Gehalt auf ca. 27,1% (theor. 28,2%). Anschließend wurde der Ansatz mit 151g N-Methylpyrrolidon verdünnt und auf 50°C gekühlt. Danach wurden 82g Butanonoxim dazu so zugetropft, dass der Ansatz sich durch eine exotherme Reaktion bis auf ca. 80°C erwärmt. Er wurde dann bei 80°C gerührt, bis keine freien NCO-Gruppen IR-spektroskopisch nachweisbar waren (ca. eine Stunde). Man erhielt eine braune Flüssigkeit mit einem Festkörpergehalt von 60% und eine Viskosität von 1200 mPas, die für über 1 Jahr kristallisationsstabil blieb.

### Beispiel 5

503,2g Desmodur VL R 20 wurden unter Rühren in 584g N-Methylpyrrolidon bei 80°C gelöst. Zur homogenen Mischung wurden bei 80°C 13,4g Diethylenglykolmonomethylether zugetropft. Nach 1 Stunde wurde der Katalysator (0,04g Zink(2-Ethylhexanoat)₂, 50% in MPA) zugegeben und der Ansatz wurde noch eine halbe Stunde bei 80°C gerührt, währenddessen sinkt der NCO-Gehalt auf ca. 12,8% (theor. 13,5%). Anschließend wurde der Ansatz auf 30°C gekühlt und 359,2g Diisopropylamin wurden dazu so zugetropft, dass der Ansatz sich durch eine exotherme Reaktion bis auf ca. 70°C erwärmt. Er wurde dann bei 80°C gerührt, bis keine freien NCO-Gruppen IR-spektroskopisch nachweisbar waren (ca. eine halbe Stunde). Man erhielt eine braune Flüssigkeit mit einem Festkörpergehalt von 60% und eine Viskosität von 2910 mPas, die für über 1 Jahr kristallisationsstabil blieb.

### Beispiel 6 :

316,8g Desmodur VL R 20 wurden unter Rühren in 303,7g Methoxypropylacetat bei Raumtemperatur gelöst. Zur homogenen Mischung wurden 352,64g *N*-Benzyl-*N*-tert.butylamin zugetropft, dass der Ansatz sich durch eine exotherme Reaktion bis auf ca. 50°C erwärmt. Er wurde dann bei 50°C gerührt, bis der NCO-Gehalt konstant blieb. Anschliessend wurden weitere 19,59 g *N*-Benzyl-*N*-tert.-butylamin zugetropft und wiederum bei 50°C gerührt, bis der NCO-Gehalt konstant blieb. Schliesslich wurden 1,96 g *N*-Benzyl-*N*-tert.-butylamin zugetropft und solange gerührt, bis IR-spektroskopisch keine Isocyanatgruppen mehr nachweisbar waren (ca. 1 Stunde). Man erhielt eine braune Flüssigkeit mit einem Festkörpergehalt von 60% und eine Viskosität von 7500 mPas.

### Beispiel 7

Zu 95,41 g (0,43 Mol) isophorondiisocyanat wurde bei 50°C eine Lösung aus 28,77 g (0,215 Mol) Dimethylolpropionsäure in 57,54 g N-Methylpyrrolidon zugegeben, auf 80°C aufgeheizt und 90 Minuten gerührt. Der NCO-Wert des Gemisches betrug dann 9,33 %. Es wurden unter Rühren 28,08 g (0,078 Val NCO) Desmodur Z 4470 M/X und 446,7 g (1,4 Val OH) eines Polyesters aus Adipinsäure, Isophthalsäure, Trimethylolpropan, Neopentylglykol und Propylenglykol der OH-Zahl von 189 zugegeben und 90 Minuten gerührt; IR-spektroskopisch waren dann keine NCO-Gruppen mehr nachweisbar. Anschließend wurden bei 70°C 164,18 g (1,73 Val blockiertes NCO) der Verbindung aus Beispiel 2 zugegeben, 10 Minuten nachgerührt, dann 19,12 g (0,215 Mol) Dimethylethanolamin zudosiert und 30 Minuten nachgerührt. Dann wurde mit 733,9 g 70°C warmem entionisiertem Wasser dispergiert, 1 Stunde bei 50°C nachgerührt und 4 Stunden unter Rühren abkühlen gelassen. Die erhaltene Dispersion besaß nachfolgende Eigenschaften:

| | |
|---|---|
| Feststoffgehalt | 41% |
| pH-Wert | 6,97 |
| Viskosität | 2350 mPas |
| Partikelgröße (Laserkorrelationsspektroskopie, LKS) | 29 nm |

### Beispiel 8

Zu 114,68 g (0,5015 Mol) Isophorondiisocyanat wurden unter Rühren bei 50°C 38,92 g (0,29 Mol) Dimethylolpropionsäure, gelöst in 93,07 g N-Methylpyrrolidon, zugegeben, das Gemisch auf 50°C aufgeheizt und 3,5 Stunden bei 85°C gerührt. Der NCO-Gehalt des Reaktionsgemisches betrug dann 7,42 % (berechnet 7,66 %). Danach wurden 19,37 g (0,085 Mol) Isophorondiisocyanat, 21,06 g (0,06 Val NCO) Desmodur Z 4470, 335,0 g (1,05 Val OH) eines Polyesters aus Adipinsäure, Isophthalsäure, Trimethylolpropan, Neopentylglykol und Propylenglykol der OH-Zahl von 189, 323,70 g (0,82 Val OH) eines Polyesters aus Isophthalsäure, Adipinsäure, Hexandiol-1,6, Trimethylolpropan und Phthalsäureanhydride der OH-Zahl 254 und 77,4 g (0,045 Mol) eines Polyesters aus Adipinsäure, Hexandiol-1,6 und Neopentylglykol mittleren Molgewichts von 1700 zugegeben und bei 85°C 2 Stunden gerührt. Danach waren IR-spektroskopisch keine NCO-Gruppen mehr nachweisbar. Nach Abkühlen auf 70°C wurden 123,14 g (0,34 Val blockiertes NCO) der Verbindung aus Beispiel 2 zugegeben, 30 Minuten nachgerührt, auf 60°C abgekühlt und 25,91 g (0,29 Mol) Dimethylethanolamin zugegeben und 30 Minuten nachgerührt. Anschließend wurden 1102,4 g 70°C warmes entionisiertes Wasser zugegeben, 60 Minuten bei 60°C nachgerührt und unter Rühren abkühlen gelassen. Die erhaltene Dispersion besaß nachfolgende Eigenschaften:

| | |
|---|---|
| Feststoffgehalt | 45,4% |
| pH-Wert | 7,72 |
| Viskosität | 4100 mPas |
| Partikelgröße (Laserkorrelationsspektroskopie, LKS) | 45 nm |

### Beispiel 9

Zu 147,90 g (0,665 Mol) Isophorondiisocyanat wurden unter Rühren bei 50°C 50,30 g (0,375 Mol) Dimethylolpropionsäure, gelöst in 100,60 g N-Methylpyrrolidon, zugegeben, das Gemisch auf 85°C aufgeheizt und 3,5 Stunden bei 85°C gerührt. Der NCO-Gehalt des Reaktionsgemisches betrug dann 7,99 % (berechnet 8,15 %). Danach wurden 4,45 g (0,02 Mol) Isophorondiisocyanat, 21,06 g (0,06 Val NCO) Desmodur Z 4470 (Bayer AG, Leverkusen), 335,0 g (1,05 Val OH) eines Polyesters aus Adipinsäure, Isophthalsäure, Trimethylolpropan, Neopentylglykol und Propylenglykol der OH-Zahl von 189, 323,70 g (0,82 Val OH) eines Polyesters aus Isophthalsäure, Adipinsäure, Hexandiol-1,6, Trimethylolpropan und Phthalsäureanhydrid der OH-Zahl 254 und 77,4 g (0,045 Mol) eines Polyesters aus Adipinsäure, Hexandiol-1,6 und Neopentylglykol mittleren Molgewichts von 1700 zugegeben und bei 85°C 2 Stunden gerührt. Danach waren IR-spektroskopisch keine NCO-Gruppen mehr nachweisbar. Nach Abkühlen auf 70°C wurden 252,80 g (0,64 Val blockiertes NCO) der Verbindung aus Beispiel 2 zugegeben, 30 Minuten nachgerührt, auf 60°C abgekühlt und 33,43 g (0,375 Mol) Dimethylethanolamin zugegeben und 30 Minuten nachgerührt. Anschließend wurden 1499,8 g 70°C warmes deionisiertes Wasser zugegeben, 60 Minuten bei 60°Cwachgerührt und unter Rühren abkühlen gelassen. Die erhaltene Dispersion besaß nachfolgende Eigenschaften:

| | |
|---|---|
| Feststoffgehalt | 39,9 % |
| pH-Wert | 7,85 |
| Viskosität | 200 mPas |
| Partikelgröße (Laserkorrelationsspektroskopie, LKS) | 41 nm |

### Beispiel 10

Es wurde gearbeitet wie im Beispiel 7 beschrieben, jedoch wurden anstelle der Verbindung aus Beispiel 2 179,40 g Desmodur VP LS 2253 und 1027,8 g Wasser zugegeben. Die erhaltene Dispersion besaß nachfolgende Eigenschaften:

| | |
|---|---|
| Feststoffgehalt | 42% |
| pH-Wert | 7,69 |
| Viskosität | 900 mPas |
| Partikelgröße (Laserkorrelationsspektroskopie, LKS) | 49 nm |

### Beispiel 11

Es wurde wie im Beispiel 7 beschrieben gearbeitet, jedoch wurden anstelle der Verbindung aus Beispiel 2 148,93 g Verbindung aus Beispiel 1 eingesetzt. Die erhaltene Dispersion besaß nachfolgende Eigenschaften:

| | |
|---|---|
| Feststoffgehalt | 42% |
| pH-Wert | 7,80 |
| Viskosität | 1600 mPas |
| Partikelgröße (Laserkorrelationsspektroskopie, LKS) | 309 nm |

### Beispiel 12

Es wurde gearbeitet wie im Beispiel 7 beschrieben, jedoch wurde anstelle der Verbindung aus Beispiel 2 168,68 g Verbindung aus Beispiel 3 verwendet. Die erhaltene Dispersion besaß nachfolgende Eigenschaften:

| | |
|---|---|
| Feststoffgehalt | 45% |
| pH-Wert | 7,54 |
| Viskosität | 4200 mPas |
| Partikelgröße (Laserkorrelationsspektroskopie, LKS) | 40 nm |

### Beispiel 13

Es wurde gearbeitet wie im Beispiel 7 beschrieben, jedoch wurde anstelle der Verbindung aus Beispiel 3 164,88 g Verbindung aus Beispiel 4 verwendet. Die erhaltene Dispersion besaß nachfolgende Eigenschaften:

| | |
|---|---|
| Feststoffgehalt | 45% |
| pH-Wert | 7,85 |
| Viskosität | 1600 mPas |
| Partikelgröße (Laserkorrelationsspektroskopie, LKS) | 78 nm |

### Beispiel 14

Zu 95,41 g Isophorondiisocyanat wurde bei 50°C eine Lösung aus 30,18 g Dimethylolpropionsäure in 52,58 g Methoxypropylacetat und 7,78 g N-Methylpyrrolidon zugegeben, auf 80°C aufgeheizt und 90 Minuten gerührt, bis der NCO-Wert des Gemisches konstant blieb. Es wurden unter Rühren 12,64 g Desmodur Z 4470 M/X und 186,67 g eines Polyesters aus Adipinsäure, Isophthalsäure, Trimethylolpropan, Neopentylglykol und Propylenglykol der OH-Zahl von 189, 194,19 g eines Polyesters aus Isophthalsäure, Adipinsäure, Hexandiol-1,6, Trimethylolpropan und Phthalsäureanhydrid der OH-Zahl 254 und 85,72 g eines Polyesters aus Adipinsäure, Hexandiol-1,6 und Neopentylglykol mittleren Molgewichts von 1700 zugegeben und bei 85°C 2 Stunden gerührt. IR-spektroskopisch waren dann keine NCO-Gruppen mehr nachweisbar. Anschließend wurden bei 70°C 178,3 g der Verbindung aus Beispiel 1 zugegeben, 10 Minuten nachgerührt, dann 19,12 g Dimethylethanolamin zudosiert und 30 Minuten nachgerührt. Dann wurde mit 945 g 70°C warmem entionisiertem Wasser dispergiert, 1 Stunde bei 50°C nachgerührt und 4 Stunden unter Rühren abkühlen gelassen. Die erhaltene Dispersion besaß nachfolgende Eigenschaften:

| | |
|---|---|
| Feststoffgehalt | 40% |
| pH-Wert | 8,67 |
| Viskosität | 1350 mPas |
| Partikelgröße (Laserkorrelationsspektroskopie, LKS) | 60 nm |

Hier sind 2 Beispiele für die Möglichkeit zur Synthese des Polymersystems in blockierten Isocyanaten. Dies hat den Vorteil, dass man nur einen Reaktionskessel benötigt und das Umfüllen der ersten Stufe entfällt.

### Beispiel 15

132 g Desmodur VL R 20 (Bayer AG, Leverkusen) wurden unter Rühren in 146g N-Methylpyrrolidon bei Raumtemperatur gelöst. Zur homogenen Mischung wurden bei 50°C 87g Butanonoxim so zugetropft, dass der Ansatz sich durch eine exotherme Reaktion bis auf ca. 80°C erwärmt. Er wurde dann bei 80°C gerührt, bis keine freien NCO-Gruppen IR-spektroskopisch nachweisbar waren (ca. 1 Stunde). Danach wurden 147,90 g (0,665 Mol) Isophorondiisocyanat zugegeben und unter Rühren bei 50°C 50,30 g (0,375 Mol) Dimethylolpropionsäure, gelöst in 100,60 g N-Methylpyrrolidon, zugegeben, das Gemisch auf 85°C aufgeheizt und 3,5 Stunden bei 85°C gerührt. Der NCO-Gehalt des Reaktionsgemisches betrug dann 4,43 % (berechnet 4,42 %). Danach wurden 4,45 g (0,02 Mol) Isophorondiisocyanat, 21,06 g (0,06 Val NCO) Desmodur Z 4470 (Bayer AG, Leverkusen), 335,0 g (1,05 Val OH) eines Polyesters aus Adipinsäure, Isophthalsäure, Trimethylolpropan, Neopentylglykol und Propylenglykol der OH-Zahl von 189, 323,70 g (0,82 Val OH) eines Polyesters aus Isophthalsäure, Adipinsäure, Hexandiol-1,6, Trimethylolpropan und Phthalsäureanhydrid der OH-Zahl 254 und 77,4 g (0,045 Mol) eines Polyesters aus Adipinsäure, Hexandiol-1,6 und Neopentylglykol mittleren Molgewichts von 1700 zugegeben und bei 85°C 2 Stunden gerührt. Danach waren IR-spektroskopisch keine NCO-Gruppen mehr nachweisbar. Nach Abkühlen auf 60°C wurden 33,43 g (0,375 Mol) Dimethylethanolamin zugegeben und 30 Minuten nachgerührt. Anschließend wurden 1369,3 g 70°C warmes deionisiertes Wasser zugegeben, 60 Minuten bei 60°C nachgerührt und unter Rühren abkühlen gelassen. Die erhaltene Dispersion besaß nachfolgende Eigenschaften:

| | |
|---|---|
| Feststoffgehalt | 42% |
| pH-Wert | 8,26 |
| Viskosität (Haake Rotationsviskosimeter, 23°C) | 210 mPas |
| Partikelgröße (Laserkorrelationsspektroskopie, LKS) | 70 nm |

### Beispiel 16

85,72 g Desmodur VL R 20 (Bayer AG, Leverkusen) wurden unter Rühren in 94,81 g N-Methylpyrrolidon bei Raumtemperatur gelöst. Zur homogenen Mischung wurden bei 50°C 56,50 g Butanonoxim so zugetropft, dass der Ansatz sich durch eine exotherme Reaktion bis auf ca. 80°C erwärmt. Er wurde dann bei 80°C gerührt, bis keine freien NCO-Gruppen IR-spektroskopisch nachweisbar waren (ca. 1 Stunde). Danach wurden bei 50°C 28,77 g Dimethylolpropionsäure, gelöst in 57,54 g N-Methylpyrrolidon, und 107,25 g 4,4'-Diisocyanatodiphenylmethan zugegeben und 1 Stunde gerührt. Der NCO-Wert des Reaktionsgemisches betrug 8,74 % (ber. 9,31 %). Dann wurden 446,72 g (1,40 Val OH) eines Polyesters aus Adipinsäure, Isophthalsäure, Trimethylolpropan, Neopentylglykol und Propylenglykol und 10,30 g (0,078 Val NCO) Desmodur VLR 20 (Bayer AG, Leverkusen) zugegeben und so lange gerührt, bis IR-spektroskopisch keine NCO-Gruppen mehr nachweisbar waren (3 Stunden). Dann wurden bei 50°C 19,12 g Dimethylethanolamin zugegeben, 20 Minuten nachgerührt und mit 745,4 g entionisiertem Wasser bei 50°C dispergiert. Die erhaltene Dispersion besaß nachfolgende Eigenschaften:

| | |
|---|---|
| Feststoffgehalt | 45% |
| pH-Wert | 7,93 |
| Viskosität (Haake Rotationsviskosimeter, 23°C) | 1370 mPas |
| Partikelgröße (Laserkorrelations spektroskopie, LKS) | 58 nm |

### Beispiel 17

55,89 g (0,414 Val NCO) Desmodur VLR 20 (Bayer AG, Leverkusen) wurden bei Raumtemperatur unter Rühren in 60,36 g Methoxypropylacetat /Butylacetat (1:1, Gew./ Gew.) gelöst. Innerhalb von 30 Minuten wurden 36,07 g (0,414 Val) Butanonoxim zugetropft, wobei die Temperatur auf 70°C anstieg. Nach weiteren 30 Minuten Rühren bei 70°C waren IR-spektroskopisch keine NCO-Gruppen mehr nachweisbar. Anschließend wurden 30,18 g (0,45 Val OH) Dimethylolpropionsäure und 91,41 g (0,822 Val OH) Isophorondiisocyanat zugegeben und das Reaktionsgemisch 200 Minuten bei 80°C gerührt; der NCO-Gehalt betrug dann 5,69 % (ber. 5,70 %). Nach Zugabe von 12,64 g (0,036 Val NCO) Desmodur Z 4470 (Bayer AG, Leverkusen), 186,67 g (0,585 Val OH) eines Polyesters aus Adipinsäure, Isophthalsäure, Trimethylolpropan, Neopentylglykol und Propylenglykol der OH-Zahl von 189, 194,19 g (0,492 Val OH) eines Polyesters aus Isophthalsäure, Adipinsäure, Hexandiol-1,6, Trimethylolpropan und Phthalsäureanhydrid der OH-Zahl 254 und 85,72 g (0,0495 Val) eines Polyesters aus Adipinsäure, Hexandiol-1,6 und Neopentylglykol mittleren Molgewichts von 1700 wurde bei 85°C 2 Stunden gerührt. Danach waren IR-spektroskopisch keine NCO-Gruppen mehr nachweisbar. Nach Abkühlen auf 70°C wurden 20,06 g (0,225 Mol) Dimethylethanolamin zugegeben und 30 Minuten nachgerührt. Anschließend wurden
875,72 g 50°C warmes deionisiertes Wasser zugegeben, 60 Minuten bei 60°C nachgerührt und unter Rühren innerhalb von 5 Stunden abkühlen gelassen. Die erhaltene Dispersion besaß nachfolgende Eigenschaften:

| | |
|---|---|
| Feststoffgehalt | 42% |
| pH-Wert | 8,43 |
| Viskosität | 5950 mPas |
| Partikelgröße (Laserkorrelations spektroskopie, LKS) | 57 nm |

### Beispiel 18

Es wurde wie im Beispiel 17 beschrieben gearbeitet, jedoch wurde anstelle des Gemisches Methoxypropylacetat / Butylacetat 60,36 g Methoxypropylacetat eingesetzt. Die erhaltene Dispersion besaß nachfolgende Eigenschaften:

| | |
|---|---|
| Feststoffgehalt | 42% |
| pH-Wert | 8,2 |
| Viskosität (Haake Rotationsvis kosimeter, 23°C) | 930 mPas |
| Partikelgröße (Laserkorrelations spektoskopie, LKS) | 195 nm |

Die folgenden Beispiele beziehen sich auf die Blockierung der freien Isocyanat-Gruppen in dem Reaktionsgemisch. Hierbei ist unerwartet, dass die Blockierungsrreaktion offenbar gut abläuft, obwohl neben dem Blockierungsmittel ein Überschuss Hydroxylgruppen vorhanden ist. Die gewollte Blockierung ist offenbar erheblich schneller als die Alkohol-Isocyanat-Reaktion, dennoch müssen aus thermodynamischen Gründen auf jeden Fall beide Reaktionen stattfinden.

### Beispiel 19

Zu 91,41 g (0,41 Mol) Isophorondiisocyanat wurden unter Rühren bei 50°C 30,18 g (0,225 Mol) Dimethylolpropionsäure, gelöst in 60,36 g Methoxypropylacetat zugegeben, das Gemisch auf 85°C aufgeheizt und 3,5 Stunden bei 85°C gerührt. Der NCO-Gehalt des Reaktionsgemisches betrug dann 8,55 % (ber. 8,59 %). Danach wurden 12,64 g (0,036 Val NCO) Desmodur Z 4470, 201,02 g (0,63 Val OH) eines Polyesters aus Adipinsäure, Isophthalsäure, Trimethylolpropan, Neopentylglykol und Propylenglykol der OH-Zahl von 189, 194;19 g (0,492 Val OH) eines Polyesters aus Isophthalsäure, Adipinsäure, Hexandiol-1,6, Trimethylolpropan und Phthalsäureanhydrid der OH-Zahl 254 und 46,43 g (0,054 Mol) eines Polyesters aus Adipinsäure, Hexandiol-1,6 und Neopentylglykol mittleren Molgewichts von 1700 zugegeben und bei 85°C 2 Stunden gerührt. Danach waren IR-spektroskopisch keine NCO-Gruppen mehr nachweisbar. Nach Abkühlen auf 50°C wurden 19,04 g Shellsol SN 100, 9,38 g Methoxypropylacetat und 33,41 g (0,384 Mol) Butanonoxim zugegeben und dann 51,84 g (0,384 Val NCO) Desmodur VLR 20 so zugegeben, dass die Temperatur 60°C nicht überstieg (ca. 15 Minuten). Nach weiteren 15 Minuten waren IR-spektroskopisch keine NCO-Gruppen mehr nachweisbar. Dann wurden bei 60°C 20,06 g (0,225 Mol) Dimethylethanolamin zugegeben, 10 Minuten nachgerührt und mit 923,5 g entionisiertem 60°C warmen Wasser dispergiert, 60 Minuten bei 60°C nachgerührt und innerhalb von 4 Stunden unter Rühren auf Raumtemperatur abkühlen gelassen. Die erhaltene Dispersion besaß nachfolgende Eigenschaften:

| | |
|---|---|
| Feststoffgehalt | 40% |
| pH-Wert | 8,0 |
| Viskosität (Haake Rotationsviskosimeter, 23°C) | 840 mPas |
| Partikelgröße (Laserkorrelationsspektroskopie, LKS) | 41 nm |

### Beispiel 20

Zu 91,41 g (0,41 Mol) Isophorondiisocyanat wurden unter Rühren bei 50°C 30,18 g (0,225 Mol) Dimethylolpropionsäure und 60,36 g Methoxypropylacetat zugegeben und das Gemisch bei 85°C 2 Stunden gerührt; der NCO-Wert betrug 8,06 % (ber. 8,58 %). Dann wurden 12,64 g (0,036 Val NCO) Desmodur Z 4470, 186,67 g (0,585 Val OH) eines Polyesters aus Adipinsäure, Isophthalsäure, Trimethylolpropan, Neopentylglykol und Propylenglykol der OH-Zahl von 189, 194,19 (0,492 Val OH) eines Polyesters aus Isophthalsäure, Adipinsäure, Hexandiol-1,6, Trimethylolpropan und Phthalsäureanhydrid der OH-Zahl 254 und 85,72 g (0,099 Val OH) eines Polyesters aus Adipinsäure, Hexandiol-1,6 und Neopentylglykol mittleren Molgewichts von 1700 zugegeben und bei 85°C 2 Stunden gerührt. Danach waren IR-spektroskopisch keine NCO-Gruppen mehr nachweisbar. Nach Abkühlen auf 50°C wurden 36,07 g (0,414 Mol) Butanonoxim zugegeben und dann 55,89 g (0,414 Val NCO) Desmodur VLR 20 so zugegeben, dass die Temperatur 60°C nicht überstieg (ca. 15 Minuten). Nach weiteren 15 Minuten rühren waren IR-spektroskopisch keine NCO-Gruppen mehr nachweisbar. Dann wurden bei 60°C 20,06 g (0,225 Mol) Dimethylethanolamin zugegeben, 10 Minuten nachgerührt und mit 875,72 g entionisiertem 60°C warmem Wasser dispergiert, 60 Minuten bei 60°C nachgerührt und unter Rühren auf Raumtemperatur abkühlen gelassen (4 Stunden). Die Dispersion besaß nachfolgende Eigenschaften:

| | |
|---|---|
| Feststoffgehalt | 43% |
| pH-Wert | 7,93 |
| Viskosität (Haake Rotationsviskosimeter, 23°C) | 3400 mPas |
| Partikelgröße (Laserkorrelationsspektroskopie, LKS) | 52 nm |

### Beispiel 21

Es wurde wie im Beispiel 20 beschrieben gearbeitet, jedoch wurde anstelle von Methoxypropylacetat ein Gemisch aus Butylacetat und Methoxypropylacetat im Verhältnis 1: 1 (Gew./Gew.) eingesetzt. Die erhaltene Dispersion besaß nachfolgende Eigenschaften:

| | |
|---|---|
| Feststoffgehalt | 41% |
| pH-Wert | 8,24 |
| Viskosität (Haake Rotationsviskosimeter, 23°C) | 3850 mPas |
| Partikelgröße (Laserkorrelationsspektroskopie, LKS) | 45 nm |

### Beispiel 22

Zu 100,55 g (0,452 Mol) Isophorondiisocyanat wurden unter Rühren bei 50°C 33,20 g (0,248 Mol) Dimethylolpropionsäure, gelöst in 66,40 g Methoxypropylacetat zugegeben, das Gemisch auf 85°C aufgeheizt und 3,5 Stunden bei 85°C gerührt. Der NCO-Gehalt des Reaktionsgemisches betrug dann 8,10 % (berechnet 8,58 %). Danach wurden 201,02 g (0,63 Val OH) eines Polyesters aus Adipinsäure, Isophthalsäure, Trimethylolpropan, Neopentylglykol und Propylenglykol der OH-Zahl von 189, 194,19 g (0,492 Val OH) eines Polyesters aus Isophthalsäure, Adipinsäure, Hexandiol-1,6, Trimethylolpropan und Phthalsäureanhydrid der OH-Zahl 254 und 46,43 g (0,054 Val OH) eines Polyesters aus Adipinsäure, Hexandiol-1,6 und Neopentylglykol mittleren Molgewichts von 1700 zugegeben und bei 85°C 2 Stunden gerührt. Danach waren IR-spektroskopisch keine NCO-Gruppen mehr nachweisbar. Nach Abkühlen auf 50°C wurden 33,41 g (0,384 Mol) Butanonoxim zugegeben und dann 51,84 g (0,384 Val NCO) Desmodur VLR 20 so zugegeben, dass die Temperatur 60°C nicht überstieg (ca. 15 Minuten). Nach weiteren 15 Minuten Rühren waren IR-spektroskopisch keine NCO-Gruppen mehr nachweisbar. Dann wurden bei 60°C 22,09 g (0,248 Mol) Dimethylethanolamin zugegeben, 10 Minuten nachgerührt und mit 957,7 g entionisiertem 60°C warmem Wasser dispergiert, 60 Minuten bei 60°C nachgerührt und innerhalb von 4 Stunden unter Rühren auf Raumtemperatur abkühlen gelassen. Die erhaltene Dispersion besaß nachfolgende Eigenschaften:

| | |
|---|---|
| Feststoffgehalt | 40% |
| pH-Wert | 7,79 |
| Viskosität (Haake Rotationsviskosimeter, 23°C) | 230 mPas |
| Partikelgröße (Laserkorrelationsspektroskopie, LKS) | 44 nm |

### Vergleichsbeispiel 1:

Es wurde wie im Beispiel 7 beschreiben gearbeitet, jedoch wurden alle Komponenten (bis zur Zugabe der Verbindung aus Beispiel 2) gemäß WO 02/143395 auf einmal, d.h. statistisch, reagieren lassen. Die erhaltene Dispersion besaß nachfolgende Eigenschaften:

| | |
|---|---|
| Feststoffgehalt | 23,7 % |
| pH-Wert | 7,93 |
| Viskosität (Haake Rotationsviskosimeter, 23°C) | pastös, Wert daher nicht messbar |
| Partikelgröße (Laserkorrelationsspektroskopie, LKS) | pastös, Wert daher nicht messbar |

Nach dem beschriebenen Vergleichsbeispiel konnte also selbst bei deutlich reduziertem Feststoffgehalt (statt 41% in Beispiel 7 wurde auf 23,7% verdünnt) keine stabile Dispersion erhalten. Das resultierende Produkt war pastös.

Die anwendungstechnischen Eigenschaften der erfindungsgemäßen Dispersionen gehen aus Tabelle 1 hervor.

Es wurden Klarlacke nachfolgender Zusammensetzung hergestellt. Aus den Klarlacken wurden Filme hergestellt, 10 Min. bei Raumtemperatur getrocknet und anschließend 30 Min. bei 140°C bzw. 160°C eingebrannt. Die erhaltenen Filme wurden anwendungstechnisch beurteilt.

Die Messung der Pendelhärten erfolgte nach der Methode von König entsprechend DIN 53157.

Die Anlösbarkeiten werden beurteilt nach jeweils 1 Minute Einwirkungszeit des Lösemittels, Reihenfolge der Lösungsmittel: Xylol / Methoxypropylacetat / Ethylacetat / Aceton Beurteilung: 0 sehr gut bis 5 schlecht

**Tabelle 1**

| **Dispersion aus Beispiel Nr.** | **7** | **8** | **9** | **10** | **11** | **12** | **13** | **15** | **16** | **19** | **20** | **21** | **22** | **Vergleich 1** |
|---|---|---|---|---|---|---|---|---|---|---|---|---|---|---|
| | | | | | | | | | | | | | | |
| Produkteinwaagen [g] | 150 | 150 | 150 | 150 | 150 | 150 | 150 | 150 | 150 | 150 | 150 | 150 | 150 | 150 |
| Additol XW 395, Lff. [g] | 1,1 | 1,2 | 1,1 | 1,2 | 1,1 | 1,1 | 1,2 | 1,1 | 1,2 | 1,1 | 0,3⁽⁴⁾ | 0,3⁽⁴⁾ | 0,3⁽⁴⁾ | 0,5 |
| Surfynol 104, 50%ig in NMP [g] | 1,1 | 1,2 | 1,1 | - | 1,1 | 1,1 | 1,2 | 1,1 | 1,2 | 1,1 | - | - | - | 0,5 |
| DMEA, 10%ig in Wasser [g] | 3,3 | 2,6 | 3,6 | 2,5 | 2,3 | 4,1 | 6,1 | 5,1 | 3,1 | 2,2 | 2,8 | 2,3 | 3,3 | - |
| dest. Wasser [g] | 21,0 | 26,0 | 6,0 | 12,0 | 20,5 | 44,0 | 27,3 | 6,0 | 16,0 | 14,0 | 18,0 | 22,5 | 13,0 | -(2) |
| Gesamt [g] | 176,5 | 181,1 | 161,7 | 165,7 | 175,0 | 200,3 | 185,8 | 163,4 | 174,7 | 168,3 | 175,1 | 175,1 | 166,6 | 151,0 |
| Festkörper [%] | 34,8 | 37,6 | 36,1 | 38,0 | 35,6 | 30 | 36 | 39 | 40,6 | 34,8 | 35,9 | 34,9 | 34,8 | 23,5 |
| Auslaufzeit ISO 5 mm [s] | 39 | 40 | 41 | 38 | 40 | 41 | 40 | 39 | 38 | 36 | 39 | 40 | 38 | 112 (2) |
| pH-Wert | 8,3 | 8,4 | 8,3 | 8,3 | 8,4 | | 8,4 | 8,3 | 8,3 | 8,3 | 8,3 | 8,4 | 8,3 | 7,8 |
| | | | | | | | | | | | | | | |
| Einbrennbedingung: 10 Min. RT+ 30 Min. 140°C | | | | | | | | | | | | | | |
| | | | | | | | | | | | | | | |
| Pendelhärte [s] | 232 | 36 | 97 | 191 | 149 | 230 | 200 | 90 | 221 | 98 | 74 | 81 | 102 | (3) |
| Anlösbarkeit 1 min. (0-5) | 2144 | 4455 | 4344 | 4344 | 4455 | 2244 | 2444 | 4444 | 1444 | 4444 | 4444 | 4444 | 3444 | (3) |
| Aussehen des Lackfilms⁽¹⁾ | i.O. | i.O. | i.O. | i.O. | i.O. | i.O. | i.O. | i.O. | i.O. | i.O. | i.O. | i.O. | i.O. | (3) |
| | | | | | | | | | | | | | | |
| Einbrennbedingung: 10 Min. RT + 30 Min. 160°C | | | | | | | | | | | | | | |
| | | | | | | | | | | | | | | |
| Pendelhärte [s] | 229 | 39 | 111 | 196 | 163 | 231 | 220 | 104 | 232 | 108 | 84 | 94 | 114 | (3) |
| Anlösbarkeit 1 Min. (0-5) | 1134 | 4444 | 4344 | 2244 | 4444 | 1134 | 2444 | 3444 | 1444 | 3444 | 3444 | 3444 | 3444 | (3) |
| Aussehen des Lackfilm ⁽¹⁾ | i.O. | i.O. | i.O. | i.O. | i.O. | i.O. | i.O. | i.O. | i.O. | i.O. | i.O. | i.O. | i.O. | (3) |
| | | | | | | | | | | | | | | |

| | | | | | | | | | | | | | | |
|---|---|---|---|---|---|---|---|---|---|---|---|---|---|---|
| (1) i.O. = in Ordnung, fehlerfrei; (2) Einstellung der Viskosität wegen Dilatanz nicht möglich; (3) Wegen Zusammenlaufen des Filmes keine Messung möglich; (4) Anstelle von Additiol XW 395 wurde Byk 347 (Byk-Chemie, Wesel, DE) eingesetzt | | | | | | | | | | | | | | |

Die nach dem Verfahren hergestellten Dispersionen weisen die gewünschten Anforderungen hinsichtlich des hohen Festkörpergehaltes auf. Weiterhin sind die Filmbildung, und die Werte für die Anlösbarkeiten bzw. Pendelhärten der ausgehärteten Filme in Ordnung. All diese Eigenschaften werden nicht erreicht, wenn nicht nach dem beschriebenen Verfahren vorgegangen wird, sondern statistische Polymere hergestellt werden. Der definierte Aufbau der Polymerstrukturen ist also entscheidend bei dieser Art von Lacksystemen. Die literaturbekannten, statistischen Verfahren können die beschriebenen Vorteile (zumindest in der Kombination der beschriebenen Eigenschaften) nicht bewirken.

## Patentansprüche

1. Verfahren zur Herstellung von selbstvernetzenden Polyurethandispersionen, bei dem
a1) Polyisocyanate mit
a2) wenigstens einer Polyolkomponente, die eine mittlere OH-Funktionalität von ≥ 2 und ein zahlenmittleres Molekulargewicht von 62 - 2500 g/mol hat sowie ferner wenigstens eine säurefunktionelle Verbindung enthält,
zu einem NCO- oder gegebenenfalls OH-funktionellen Prepolymer umgesetzt wird, welches dann mit
a3) wenigstens einer weiteren Polyolkomponente mit einer mittleren OH-Funktionalität von > 1 und
a4) gegebenenfalls einer weiteren Polyisocyanatkomponente, die gleich oder verschieden zu a1) sein kann
zu einem OH-funktionellen und NCO-gruppenfreien Polyurethan umgesetzt wird, wobei entweder vor oder im Anschluss an die vollständige Umsetzung der Komponenten a1) bis a4) ein blockiertes Polyisocyanat zugegeben oder dieses blockierte Polyisocyanat nach erfolgter Umsetzung der Komponenten a1) bis a4) in situ aus einem Polyisocyanat und einem Blockierungsmittel hergestellt wird und abschließend die Säuregruppen der so erhaltenen Zusammensetzung
a5) durch Zugabe eine Neutralisationsmittels ganz oder teilweise deprotoniert werden und das erhaltene Polyurethan in Wasser dispergiert wird.

2. Verfahren gemäß Anspruch 1, **dadurch gekennzeichnet, dass** Verhältnis der Isocyanat-gruppen, einschließlich der blockierten Gruppen, zu allen gegenüber Isocyanaten reaktionsfähigen Gruppen 0,8 zu 1 bis 1,5 zu 1 beträgt.

3. Verfahren gemäß Anspruch 1 oder 2, **dadurch gekennzeichnet, dass** in Komponente a1) und/oder a4) Polyisocyanate oder Polyisocyanatgemische auf Basis von Hexamethylendiisocyanate (HDI), Isophorondiisocyanat (IPDI), Diphenylmethan-2,4' und/oder 4,4'-Diisocyanat (MDI) und/oder Toluylendiisocyanat (TDI), 4,4'-Diisocyanatodicyclohexylmethan eingesetzt werden.

4. Verfahren gemäß einem der Ansprüche 1 bis 3 **dadurch gekennzeichnet, dass** die Polyisocyanate in a1) und/oder a4) Verbindungen mit Uretdion-, Carbodiimid-, Isocyanurat-, Iminooxadiazindion-, Biuret-, Urethan-, Allophanat-, Oxadiazintrion- oder Acylharnstoff-Strukturen aufweisen.

5. Verfahren gemäß einem der Ansprüche 1 bis 4, **dadurch gekennzeichnet, dass** die Polyolkomponente a2) eine mittlere OH-Funktionalität von 2 bis 6 und ein zahlenmittleres Molekulargewicht von 62 bis 500 g/mol aufweist und mindestens eine säurefunktionelle Verbindung enthält, die neben der Säurefunktion noch mindestens eine isocyanatreaktive Gruppe wie OH, NH oder SH aufweist.

6. Verfahren gemäß einem der Ansprüche 1 bis 5, **dadurch gekennzeichnet, dass** a2) 1,4-Butandiol, 1,3-Butandiol, 1,6-Hexandiol, 2,2,4-Trimethyl-1,3-pentandiol, Trimethylolpropan und/oder Polyester- und/oder Polyetherpolyole mit einem zahlenmittleren Molekulargewicht von ≤ 2000 g/mol enthält.

7. Verfahren gemäß einem der Ansprüche 1 bis 6, **dadurch gekennzeichnet, dass** als säurefunktionelle Verbindung Hydroxypivalinsäure, Dimethylbuttersäure und/oder Dimethylolpropionsäure enthalten ist.

8. Verfahren gemäß einem der Ansprüche 1 bis 7, **dadurch gekennzeichnet, dass** die in a3) eingesetzte Polyolkomponente besteht aus
b1) 2- bis 6-wertigen Alkoholen mit zahlenmittleren Molekulargewichten von 62 bis 300 g/mol, bevorzugt 62 bis 182 g/mol, besonders bevorzugt 62 bis 118 g/mol,
b2) Polyolen mit einer OH-Funktionalität ≥ 2 und mit zahlenmittleren Molekulargewichten von 300 bis 5000 g/mol, bevorzugt 300 bis 3000 g/mol, besonders bevorzugt 300 bis 2000 g/mol und/oder
b3) monofunktionellen linearen Polyethern mit zahlenmittleren Molekulargewichten von 300 bis 3000 g/mol, bevorzugt 300 bis 2000 g/mol, besonders bevorzugt 300 bis 1000g/mol.

9. Verfahren gemäß einem der Ansprüche 1 bis 8, **dadurch gekennzeichnet, dass** Katalysatoren mit verwendet werden.

10. Verfahren gemäß einem der Ansprüche 1 bis 9, **dadurch gekennzeichnet, dass** zur Neutralisation Triethylamin, Dimethylaminoethanol, Dimethylcyclohexylamin, Triethanolamin, Methyldiethanolamin, Diisopropanolamin, Ethyldiisopropylamin, Diisopropylcyclohexylamin, N-Methylmorpholin, 2-Amino-2- methyl-1-propanol, Ammoniak oder deren beliebige Gemische verwendet werden.

11. Selbstvemetzenden Polyurethandispersionen erhältlich nach einem Verfahren gemäß einem der Ansprüche 1 bis 10.

12. Verwendung der selbstvernetzenden Polyurethandispersionen gemäß Anspruch 11, bei der Herstellung von Beschichtungen, Kleb- und Dichtstoffen.

## Claims

1. A method for producing self-crosslinking polyurethane dispersions in which
a1) polyisocyanates are reacted with
a2) at least one polyol component, which has an average OH functionality of ≥ 2 and a number-average molecular weight of 62-2500 g/mol and furthermore contains at least one acid-functional compound,
to yield an NCO-functional or optionally OH-functional prepolymer, which is then reacted with
a3) at least one further polyol component with an average OH functionality of > 1 and
a4) optionally a further polyisocyanate component, which may be identical to or different from a1)
to yield an OH-functional polyurethane containing no NCO groups, wherein either before or subsequent to complete reaction of components a1) to a4) a blocked polyisocyanate is added or, once the reaction of components a1) to a4) has occurred, said blocked polyisocyanate is produced in situ from a polyisocyanate and a blocking agent, after which the acid groups of the resultant composition
a5) are entirely or partially deprotonated by addition of a neutralising agent and the resultant polyurethane is dispersed in water.

2. A method according to claim 1, **characterised in that** the ratio of isocyanate groups, including the blocked groups, to all groups capable of reacting with isocyanates amounts to 0.8:1 to 1.5:1.

3. A method according to claim 1 or claim 2,
**characterised in that** polyisocyanates or polyisocyanate mixtures based on hexamethylene diisocyanate (HDI), isophorone diisocyanate (IPDI), diphenylmethane-2,4'- and/or 4,4'-diisocyanate (MDI) and/or tolylene diisocyanate (TDI), 4,4'-diisocyanatodicyclohexylmethane are used in component a1) and/or a4).

4. A method according to any one of claims 1 to 3,
**characterised in that** the polyisocyanates in a1) and/or a4) comprise compounds with uretidione, carbodiimide, isocyanurate, iminooxadiazinedione, biuret, urethane, allophanate, oxadiazinetrione or acylurea structures.

5. A method according to any one of claims 1 to 4,
**characterised in that** the polyol component a2) exhibits an average OH functionality of 2 to 6 and a number-average molecular weight of 62 to 500 g/mol and contains at least one acid-functional compound which in addition to the acid function also comprises at least one isocyanate-reactive group such as OH, NH or SH.

6. A method according to any one of claims 1 to 5,
**characterised in that** a2) contains 1,4-butanediol, 1,3-butanediol, 1,6-hexanediol, 2,2,4-trimethyl-1,3-pentanediol, trimethylolpropane and/or polyester polyols and/or polyether polyols with a number-average molecular weight of ≤ 2000 g/mol.

7. A method according to any one of claims 1 to 6, **characterised in that** hydroxypivalic acid, dimethylbutyric acid and/or dimethylolpropionic acid is present as the acid-functional compound.

8. A method according to any one of claims 1 to 7, **characterised in that** the polyol component used in a3) consists of
b1) di- to hexahydric alcohols with number-average molecular weights of 62 to 300 g/mol, preferably of 62 to 182 g/mol, particularly preferably of 62 to 118 g/mol,
b2) polyols with an OH functionality of ≥ 2 and with number-average molecular weights of 300 to 5000 g/mol, preferably of 300 to 3000 g/mol, particularly preferably of 300 to 2000 g/mol and/or
b3) monofunctional linear polyethers with number-average molecular weights of 300 to 3000 g/mol, preferably of 300 to 2000 g/mol, particularly preferably of 300 to 1000 g/mol.

9. A method according to any one of claims 1 to 8, **characterised in that** catalysts are also used.

10. A method according to any one of claims 1 to 9, **characterised in that** triethylamine, dimethylaminoethanol, dimethylcyclohexylamine, triethanolamine, methyldiethanolamine, diisopropanolamine, ethyldiisopropylamine, diisopropylcyclohexylamine, N-methylmorpholine, 2-amino-2-methyl-1-propanol, ammonia or any desired mixtures thereof are used for neutralisation.

11. Self-crosslinking polyurethane dispersions obtainable by a method according to any one of claims 1 to 10.

12. Use of the self-crosslinking polyurethane dispersions according to claim 11 in the production of coatings, adhesives and sealants.

## Revendications

1. Procédé pour la préparation de dispersions de polyuréthane autoréticulantes, dans lequel
on fait réagir
a1) des polyisocyanates avec
a2) au moins un constituant polyol, qui présente une fonctionnalité OH moyenne ≥ 2 et un poids moléculaire moyen en nombre de 62-2 500 g/mol et qui contient de plus au moins un composé acide-fonctionnel,
en un prépolymère NCO- ou éventuellement OH-fonctionnel, lequel réagit alors avec
a3) au moins un autre constituant polyol avec une fonctionnalité OH moyenne > 1 et
a4) éventuellement un autre constituant polyisocyanate, lequel peut être identique ou différent de a1)
en un polyuréthane OH-fonctionnel et exempt de groupes NCO, dans lequel on ajoute soit avant, soit à la fin de la réaction complète des constituants a1) à a4) un polyisocyanate bloqué ou on prépare ce polyisocyanate bloqué après réaction achevée des constituants a1) à a4) in situ à partir d'un polyisocyanate et d'un agent de blocage et on déprotone totalement ou partiellement ensuite les groupes acides de la composition ainsi obtenue
a5) par addition d'un agent de neutralisation et on disperse le polyuréthane obtenu dans de l'eau.

2. Procédé selon la revendication 1, **caractérisé en ce que** le rapport des groupes isocyanates, comprenant les groupes bloqués, par rapport à tous les groupes capables de réagir avec des isocyanates est compris entre 0,8 à 1 et 1,5 à 1.

3. Procédé selon la revendication 1 ou 2, **caractérisé en ce que** l'on utilise dans le constituant a1) et/ou a4) des polyisocyanates ou des mélanges de polyisocyanates à base de diisocyanate d'hexaméthylène (HDI), de diisocyanate d'isophorone (IPDI), de 2,4' et/ou 4,4'-diisocyanate de diphénylméthane (MDI) et/ou de diisocyanate de toluylène (TDI), de 4,4'-diisocyanatodicyclohexylméthane.

4. Procédé selon l'une quelconque des revendications 1 à 3, **caractérisé en ce que** les polyisocyanates dans a1) et/ou a4) présentent des composés avec des structures uretdione, carbodiimide, isocyanurate, imminooxadiazinedione, biuret, uréthane, allophanate, oxadiazinetrione ou acylurée.

5. Procédé selon l'une quelconque des revendications 1 à 4, **caractérisé en ce que** le constituant polyol a2) présente une fonctionnalité OH moyenne de 2 à 6 et un poids moléculaire moyen en nombre de 62 à 500 g/mol et contient au moins un composé acide fonctionnel, lequel présente en plus de la fonction acide encore au moins un groupe isocyanate réactif comme OH, NH ou SH.

6. Procédé selon l'une quelconque des revendications 1 à 5, **caractérisé en ce que** a2) contient du 1,4-butanediol, du 1,3-butanediol, du 1,6-hexanediol, du 2,2,4-triméthyl-1,3-pentanediol, du triméthylolpropane et/ou des polyester- et/ou polyétherpolyols avec un poids moléculaire moyen en nombre ≤ 2 000 g/mol.

7. Procédé selon l'une quelconque des revendications 1 à 6, **caractérisé en ce qu'**est contenu comme composé acide-fonctionnel de l'acide hydroxypivalique, de l'acide diméthylbutyrique et/ou de l'acide diméthylolpropionique.

8. Procédé selon l'une quelconque des revendications 1 à 7, **caractérisé en ce que** le constituant polyol utilisé dans a3) est constitué
b1) d'alcools bi- à hexavalents avec des poids moléculaires moyens en nombre de 62 à 300 g/mol, de préférence de 62 à 182 g/mol, encore mieux de 62 à 118 g/mol,
b2) de polyols avec une fonctionnalité OH ≥ 2 et des poids moléculaires moyens en nombre de 300 à 5 000 g/mol, de préférence de 300 à 3 000 g/mol, encore mieux de 300 à 2 000 g/mol et/ou
b3) de polyéthers linéaires monofonctionnels avec des poids moléculaires moyens en nombre de 300 à 3 000 g/mol, de préférence de 300 à 2 000 g/mol, encore mieux de 300 à 1 000 g/mol.

9. Procédé selon l'une quelconque des revendications 1 à 8, **caractérisé en ce que** l'on utilise des catalyseurs.

10. Procédé selon l'une quelconque des revendications 1 à 9, **caractérisé en ce que** l'on utilise pour la neutralisation de la triéthylamine, du diméthylaminoéthanol, de la diméthylcyclohexylamine, de la triéthanolamine, de la méthyldiéthanolamine, de la diisopropanolamine, de l'éthyldiisopropylamine, de la diisopropylcyclohexylamine, de la N-méthylmorpholine, du 2-amino-2-méthyl-1-propanol, de l'ammoniac ou des mélanges quelconques de ceux-ci.

11. Dispersions de polyuréthane autoréticulantes obtenues selon un procédé selon l'une quelconque des revendications 1 à 10.

12. Utilisation des dispersions de polyuréthane autoréticulantes selon la revendication 11 pour la préparation de revêtements, d'adhésifs et de matériaux d'étanchéité.
